# EUROPEAN PATENT APPLICATION

(11) **EP 4 546 736 A1**
(43) Date of publication of application: **30.04.2025**
(21) Application number: 23841799.2
(22) Date of filing: 31.03.2023
(51) Int. Cl.: H04L 41/084

(54) **DEVICE CONFIGURATION METHOD, NETWORK DEVICE, CHIP AND COMPUTER READABLE STORAGE MEDIUM**

(30) Priority: 20.07.2022 CN 202210861716
(71) Applicant: Huawei Technologies Co., Ltd., Shenzhen, Guangdong 518129 (CN)
(72) Inventor: WU, Zhan, Shenzhen, Guangdong 518129 (CN)
(74) Representative: Pfenning, Meinig & Partner mbB
(86) International application number: PCT/CN2023/085750
(87) International publication number: WO 2024/016726

(57) **Abstract**

Embodiments of this application provide a device configuration method, and relate to the communication field. A first network device parses a plurality of configuration templates based on a YANG model to obtain an effective configuration template, where the plurality of configuration templates all meet a language specification of the YANG model, and the plurality of configuration templates have a template inheritance relationship and/or a template aggregation relationship; associates the effective configuration template with an obtained device configuration parameter; converts the effective configuration template associated with the device configuration parameters into a configuration packet; and delivers the configuration packet to a second network device, to enable the second network device to perform corresponding network configuration based on the configuration packet. Embodiments of this application further provide a network device, a chip, and a computer-readable storage medium. In embodiments of this application, the configuration packet is generated by using the hierarchical configuration templates that comply with the language specification of the YANG model, so that operation and maintenance efficiency of the network device can be improved.

## Description

This application claims priority to Chinese Patent Application No. 202210861716.5, filed with the China National Intellectual Property Administration on July 20, 2022 and entitled "DEVICE CONFIGURATION METHOD, NETWORK DEVICE, CHIP, AND COMPUTER-READABLE STORAGE MEDIUM", which is incorporated herein by reference in its entirety

### TECHNICAL FIELD

This application relates to the communication field, and in particular, to a device configuration method, a network device, a chip, and a computer-readable storage medium.

### BACKGROUND

In conventional automatic network operation and maintenance technologies, a network device is usually configured through a command line interface (command line interface, CLI). Network devices are provided by different vendors with different brands. In addition, management and configuration modes of the vendors and brands are different, that is, CLI configuration commands are different. As a result, maintenance of network devices is difficult.

To improve device operation and maintenance efficiency, operation and maintenance personnel usually use a CLI template technology to copy configuration data in batches to a plurality of network devices. However, conventional CLI templates are independent of each other and cannot be customized hierarchically. Consequently, the operation and maintenance efficiency is still low.

### SUMMARY

In view of this, it is necessary to provide a device configuration method, to resolve problems in conventional technologies that operation and maintenance of a network device is difficult and efficiency is low.

A first aspect of embodiments of this application discloses a device configuration method, including: parsing a configuration template based on a yet another next generation (Yet Another Next Generation, YANG) model, and determining a parent configuration template the configuration template inherits and/or a sub configuration template the configuration template aggregates; if the configuration template inherits a parent configuration template and/or aggregates a sub configuration template, obtaining an effective configuration template through conversion based on the configuration template and the parent configuration template and/or the sub configuration template of the configuration template, where the configuration template and the parent configuration template and/or the sub configuration template of the configuration template all meet a YANG language specification of the YANG model; obtaining a device configuration parameter, and associating the device configuration parameter with the effective configuration template; converting the effective configuration template associated with the device configuration parameter into a configuration packet; and sending the configuration packet to a network device.

In this technical solution, a template technology is used to perform network configuration on the network device. This can improve operation and maintenance efficiency of the network device and flexibly customize different network configuration parameters for the network device. In addition, the configuration template complies with the YANG language specification of the YANG model, so that the configuration template can be applied to configuration of the network device based on the YANG model. The configuration templates may have a template inheritance relationship and/or a template aggregation relationship. Based on a hierarchical template design concept, the configuration templates are highly reusable and easy to maintain. The configuration templates can be flexibly combined based on an actual network configuration requirement, and the network configuration requirement is easy to implement.

In some embodiments, the device configuration method further includes: if the configuration template does not inherit a parent configuration template and does not aggregate a sub configuration template, obtaining the effective configuration template through conversion based on the configuration template.

In this technical solution, if the configuration template does not inherit a parent configuration template and does not aggregate a sub configuration template, it indicates that the configuration template does not inherit a configuration command set of another configuration template or does not reference a configuration command set of another configuration template. Therefore, the configuration template may be directly converted to obtain the effective configuration template.

In some embodiments, before the parsing a configuration template based on a YANG model, the method includes: obtaining the YANG model associated with the configuration template.

In this technical solution, the configuration template is parsed by using the YANG model associated with the configuration template, so that a case in which the configuration template cannot be parsed because an incorrect YANG model is used can be avoided.

In some embodiments, the obtaining the YANG model associated with the configuration template includes: obtaining a device type or a device model used by the configuration template; and determining, based on the device type or the device model, the YANG model associated with the configuration template.

In this technical solution, different device types or device models may correspond to different YANG models. The device type or the device model that can be used by the configuration template may be preset for the configuration template, so that the YANG model associated with the configuration template can be determined by obtaining the device type or device model used by the configuration template.

In some embodiments, the obtaining an effective configuration template through conversion based on the configuration template and the parent configuration template and/or the sub configuration template of the configuration template includes: performing a YANG syntax check on the configuration template and the parent configuration template and/or the sub configuration template of the configuration template based on the YANG model, where the parent configuration template the configuration template inherits and/or the sub configuration template the configuration template aggregates are/is configured based on a model type of the YANG model; and if the check on the configuration template and the parent configuration template and/or the sub configuration template of the configuration template all succeeds, obtaining the effective configuration template through the conversion based on the configuration template and the parent configuration template and/or the sub configuration template of the configuration template.

In this technical solution, an inheritance relationship and/or an aggregation relationship of the configuration template are/is based on the model type of the YANG model. The configuration template does not need to include a check logic, and a device that performs the device configuration method automatically checks the configuration template based on the YANG model. This can reduce a threshold for operation and maintenance personnel to compile the configuration template. When the check on the configuration template and the parent configuration template and/or the sub configuration template of the configuration template all succeeds, the effective configuration template is obtained through the conversion based on the configuration template and the parent configuration template and/or the sub configuration template. This avoids a YANG syntax error in the effective configuration template obtained through the conversion.

In some embodiments, the converting the effective configuration template associated with the device configuration parameter into a configuration packet includes: performing, based on the YANG model, a YANG semantic check on the effective configuration template associated with the device configuration parameter; and if the check on the effective configuration template succeeds, converting the effective configuration template associated with the device configuration parameter into the configuration packet.

In this technical solution, the YANG semantic check is performed on the effective configuration template based on the YANG model, to check whether the effective configuration template has a YANG semantic error. After the check on the effective configuration template succeeds, the effective configuration template associated with the device configuration parameter is converted into the configuration packet, to reduce a possible subsequent network configuration error and improve operation and maintenance efficiency of the network device.

In some embodiments, the effective configuration template includes a variable, and the converting the effective configuration template associated with the device configuration parameter into the configuration packet includes: assigning a value to the variable in the effective configuration template based on the device configuration parameter, to obtain the configuration packet.

In this technical solution, the configuration template includes one or more variables, and the effective configuration template obtained through the conversion based on the configuration template also includes one or more variables. The configuration packet may be obtained by assigning the value to the variable in the effective configuration template.

In some embodiments, the converting the effective configuration template associated with the device configuration parameter into a configuration packet includes: obtaining a network configuration protocol supported by the network device; and converting the effective configuration template associated with the device configuration parameter into the configuration packet, where a format of the configuration packet is determined based on the network configuration protocol.

In this technical solution, the format of the configuration packet delivered to the network device is determined based on the network configuration protocol supported by the network device, so that the network device can perform corresponding network configuration based on the configuration packet.

In some embodiments, the format of the configuration packet includes a JavaScript object notation (JavaScript Object Notation, JSON) format or an extensible markup language (Extensible Markup Language, XML) format.

In this technical solution, the format of the configuration packet may include the JSON format or the XML format. For example, for a network device that supports a RESTCONF protocol, the delivered configuration packet may be in the JSON format or the XML format. For a network device that supports a NETCONF protocol, the delivered configuration packet may be in the XML format.

In some embodiments, the device configuration method further includes: enabling a template creation page in response to a creation instruction for the configuration template, where the template creation page includes a plurality of configuration items; and generating the configuration template based on content of the plurality of configuration items.

In this technical solution, the operation and maintenance personnel may create the configuration template by using the template creation page, for example, fill in content or select content for the configuration item in the template creation page. The configuration template is simple and convenient to create. This can reduce a threshold for operation and maintenance personnel to compile the configuration template.

A second aspect of embodiments of this application discloses a device configuration method, applied to a first network device and a second network device. The device configuration method includes: The first network device parses a plurality of configuration templates based on a YANG model to obtain an effective configuration template, where the plurality of configuration templates have a template inheritance relationship and/or a template aggregation relationship, and the plurality of configuration templates all meet a YANG language specification of the YANG model. The first network device obtains a device configuration parameter, and associates the device configuration parameter with the effective configuration template. The first network device converts the effective configuration template associated with the device configuration parameter into a configuration packet. The first network device sends the configuration packet to the second network device. The second network device performs corresponding network configuration based on the configuration packet.

In this technical solution, a template technology is used to perform network configuration on the second network device. This can improve operation and maintenance efficiency of the second network device and flexibly customize different network configuration parameters for the second network device. In addition, the configuration template complies with the YANG language specification of the YANG model, so that the configuration template can be applied to configuration of the network device based on the YANG model. The configuration templates may have the template inheritance relationship and/or the template aggregation relationship. Based on a hierarchical template design concept, the configuration templates are highly reusable and easy to maintain. The configuration templates can be flexibly combined based on an actual network configuration requirement, and the network configuration requirement is easy to implement.

In some embodiments, before the first network device parses the plurality of configuration templates based on the YANG model, the method includes: The first network device obtains the YANG model associated with the plurality of configuration templates.

In this technical solution, the first network device parses the configuration template by using the YANG model associated with the configuration template, so that a case in which the configuration template cannot be parsed because an incorrect YANG model is used can be avoided.

In some embodiments, that the first network device obtains the YANG model associated with the plurality of configuration templates includes: The first network device obtains a device type or a device model used by the plurality of configuration templates. The first network device determines, based on the device type or the device model, the YANG model associated with the plurality of configuration templates.

In this technical solution, different device types or device models may correspond to different YANG models. The device type or the device model that can be used by the configuration template may be preset for the configuration template, so that the first network device may determine, by obtaining the device type or device model used by the configuration template, the YANG model associated with the configuration template.

In some embodiments, that the first network device parses a plurality of configuration templates based on a YANG model to obtain an effective configuration template includes: The first network device performs a YANG syntax check and template inheritance relationship parsing and/or template aggregation relationship parsing on each configuration template of the plurality of configuration templates based on the YANG model, where the template inheritance relationship parsing and/or the template aggregation relationship parsing are/is configured based on a model type of the YANG model. If the check on each configuration template succeeds, the first network device converts the plurality of configuration templates into the effective configuration template based on a parsing result.

In this technical solution, an inheritance relationship and/or an aggregation relationship of the configuration template are/is based on the model type of the YANG model. The configuration template does not need to include a check logic, and the first network device automatically checks the configuration template based on the YANG model. This can reduce a threshold for operation and maintenance personnel to compile the configuration template. When the check on the plurality of configuration templates succeeds, the effective configuration template is obtained through the conversion based on the plurality of configuration templates. This avoids a YANG syntax error in the effective configuration template obtained through the conversion.

In some embodiments, that the first network device converts the effective configuration template associated with the device configuration parameter into a configuration packet includes: The first network device performs, based on the YANG model, a YANG semantic check on the effective configuration template associated with the device configuration parameter. If the check on the effective configuration template succeeds, the first network device converts the effective configuration template associated with the device configuration parameter into the configuration packet.

In this technical solution, the first network device performs the YANG semantic check on the effective configuration template based on the YANG model, to check whether the effective configuration template has a YANG semantic error; and after the check on the effective configuration template succeeds, converts the effective configuration template associated with the device configuration parameter into the configuration packet, to reduce a possible subsequent network configuration error, and improve operation and maintenance efficiency of the second network device.

In some embodiments, the effective configuration template includes a variable, and that the first network device converts the effective configuration template associated with the device configuration parameter into the configuration packet includes: The first network device assigns a value to the variable in the effective configuration template based on the device configuration parameter, to obtain the configuration packet.

In this technical solution, the configuration template includes one or more variables, and the effective configuration template obtained through the conversion based on the configuration template also includes one or more variables. The first network device may obtain the configuration packet by assigning the value to the variable in the effective configuration template.

In some embodiments, that the first network device converts the effective configuration template associated with the device configuration parameter into a configuration packet includes: The first network device obtains a network configuration protocol supported by the second network device. The first network device converts the effective configuration template associated with the device configuration parameter into the configuration packet, where a format of the configuration packet is determined based on the network configuration protocol.

In this technical solution, the format of the configuration packet delivered by the first network device to the second network device is determined based on the network configuration protocol supported by the second network device, so that the second network device can perform corresponding network configuration based on the configuration packet subsequently.

In some embodiments, the format of the configuration packet includes a JSON format or an XML format, the first network device includes a controller, and the second network device includes one of a switch, a router, or a forwarder.

In this technical solution, the format of the configuration packet delivered by the controller to the switch, the router, or the forwarder may include the JSON format or the XML format. For example, for a network device that supports a RESTCONF protocol, the delivered configuration packet may be in the JSON format or the XML format. For a network device that supports a NETCONF protocol, the delivered configuration packet may be in the XML format.

In some embodiments, the device configuration method further includes: The first network device enables a template creation page in response to a creation instruction for the configuration template, where the template creation page includes a plurality of configuration items. The first network device generates the configuration template based on content of the plurality of configuration items.

In this technical solution, the operation and maintenance personnel may create the configuration template by using the template creation page, for example, fill in content or select content for the configuration item in the template creation page. The configuration template is simple and convenient to create. This can reduce a threshold for operation and maintenance personnel to compile the configuration template.

According to a third aspect, an embodiment of this application provides a computer-readable storage medium, where the computer-readable storage medium stores computer instructions, and when the computer instructions are run on a processor of a network device, the network device is enabled to perform the device configuration method according to the first aspect.

According to a fourth aspect, an embodiment of this application provides a network device, where the network device includes a processor and a memory, the memory is configured to store instructions, and the processor is configured to invoke the instructions in the memory, to enable the network device to perform the device configuration method according to the first aspect.

According to a fifth aspect, an embodiment of this application provides a computer program product. When the computer program product runs on a computer, the computer is enabled to perform the device configuration method according to the first aspect.

According to a sixth aspect, an apparatus is provided. The apparatus has a function of implementing behavior of a device in the method provided in the first aspect. The function may be implemented by hardware, or may be implemented by hardware executing corresponding software. The hardware or the software includes one or more modules corresponding to the foregoing function.

It may be understood that the computer-readable storage medium in the third aspect, the network device in the fourth aspect, the computer program product in the fifth aspect, and the apparatus in the sixth aspect all correspond to the method in the first aspect. Therefore, for beneficial effects that can be achieved by the computer-readable storage medium in the third aspect, the network device in the fourth aspect, the computer program product in the fifth aspect, and the apparatus in the sixth aspect, refer to beneficial effects in the corresponding method provided above. Details are not described herein again.

### BRIEF DESCRIPTION OF DRAWINGS

FIG. 1 is a schematic diagram of an application scenario of a device configuration method according to an embodiment of this application;
FIG. 2 is a schematic architectural diagram of a control device according to an embodiment of this application;
FIG. 3a is a schematic architectural diagram of a template engine according to an embodiment of this application;
FIG. 3b is a schematic flowchart of obtaining a configuration packet through conversion based on a template engine according to an embodiment of this application;
FIG. 3c is a schematic diagram showing a plurality of configuration templates according to an embodiment of this application;
FIG. 3d is a schematic diagram of invoking a template engine in a nested mode according to an embodiment of this application;
FIG. 4 is a schematic flowchart of a device configuration method according to an embodiment of this application;
FIG. 5 is a schematic diagram of a user interface configured to create a configuration template according to an embodiment of this application;
FIG. 6 is a schematic diagram of an association relationship between a plurality of configuration templates according to an embodiment of this application;
FIG. 7 is a schematic flowchart of a device configuration method according to an embodiment of this application; and
FIG. 8 is a schematic diagram of a control device according to an embodiment of this application.

### DESCRIPTION OF EMBODIMENTS

It should be noted that in this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. In the specification, claims, and accompanying drawings of this application, the terms "first", "second", "third", "fourth", and so on (if existent) are intended to distinguish between similar objects but do not indicate a specific order or sequence.

In embodiments of this application, words such as "example" or "for example" are used to represent giving an example, an illustration, or a description. Any embodiment or design scheme described as "example" or "for example" in embodiments of this application should not be explained as being more preferred or having more advantages than another embodiment or design scheme. Exactly, use of the words such as "example" or "for example" is intended to present a related concept in a specific manner.

For ease of understanding, some concepts related to embodiments of this application are described as examples for reference.

NETCONF: network configuration protocol, a standardized network management protocol developed by the Internet Engineering Task Force (Internet Engineering Task Force, IETF). NETCONF provides a mechanism for installing, operating, and deleting network device configurations.

REST: representational state transfer, a set of architectural constraints and principles. Applications or designs that meet the constraints and principles are called RESTful.

RESTCONF: REST configuration protocol, another IETF standard, implements some NETCONF functions based on a RESTful interface. RESTCONF is NETCONF that uses extensible markup language (Extensible Markup Language, XML) or JavaScript object notation (JavaScript Object Notation) JSON messages by using a hypertext transfer protocol (HyperText Transfer Protocol, HTTP)/hypertext transfer protocol over secure sockets layer (HyperText Transfer Protocol over Secure Sockets Layer, HTTPS). However, RESTCONF lacks several key NETCONF components, including a plurality of data storages, submission or rollback, and configuration locking.

YANG (Yet Another Next Generation) model: also called "yet another next-generation model", a data modeling language used to define data sent through network management protocols such as network configuration protocols NETCONF and RESTCONF. The YANG data modeling language is maintained by a NETMOD working group of the Internet Engineering Task Force (Internet Engineering Task Force, IETF) and was released as RFC 6020 in October 2010.

The YANG model modularizes a hierarchy of data into a tree. Each node in the tree has a name (that is, a node name) and a value (that is, a node value), and may further have a child node set. A module (Module) in the YANG model may define a hierarchy of the nodes and may be used for NETCONF-based operations. In addition, a module is independent and can be compiled based on a definition of the module and a definition introduced or included elsewhere. When the module includes a plurality of nodes, the plurality of nodes may have a hierarchical relationship. Herein, the hierarchical relationship of the plurality of nodes refers to a relationship between the plurality of nodes in the tree, and terms such as a parent (parent) node and a child (child) node may be used to describe the hierarchical relationship between the nodes. For example, assuming that a node 1 may be a parent node of a node 2, and the node 2 may be a parent node of a node 3, the node 1 may be an upper-level node of the node 2, and the node 2 may be an upper-level node of the node 3. In other words, the node 2 may be a lower-level node of the node 1, and the node 3 may be a lower-level node of the node 2.

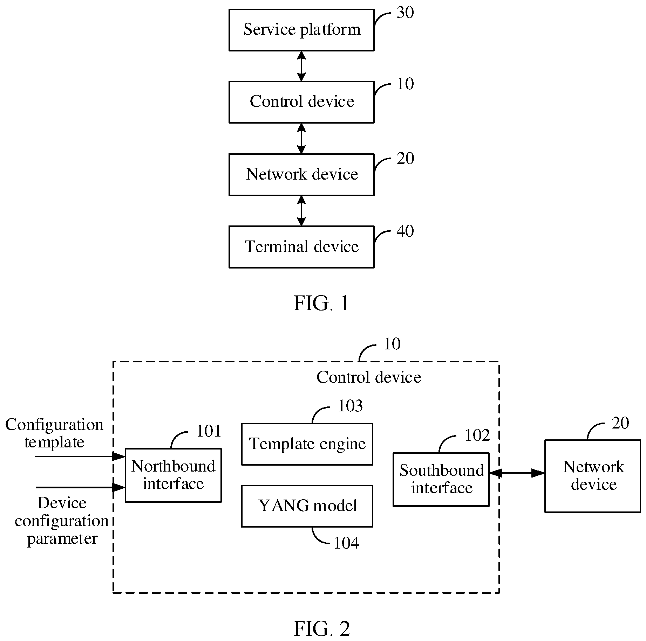

FIG. 1 is a schematic diagram of an application scenario of a device configuration method according to an embodiment of this application. The application scenario may include a control device 10 and a network device 20. The control device 10 may send a configuration packet to the network device 20 based on a YANG model.

The control device 10 may be connected to a service platform 30, and the service platform 30 may send an instruction to the control device 10, to perform network configuration on the network device 20. The network device 20 may be connected to a terminal device 40. The terminal device 40 may access a network via the network device 20.

The control device 10 may be a controller, for example, a software-defined networking (software-defined networking, SDN) controller, or another device running an element management system (element management system, EMS). The network device 20 may be a switch, a router, a forwarder, or the like. The service platform 30 may be a user management system, a big data analysis platform, a network management system, or the like. The terminal device 40 may be customer-premises equipment (customer-premises equipment, CPE), a smartphone, a multimedia device, a streaming media device, a personal computer, a tablet computer, a palmtop computer, a mobile Internet device (mobile Internet device, MID), a wearable intelligent device, or the like.

An interface between the control device 10 and the network device 20 may be denoted as a southbound interface, and an interface between the control device 10 and the service platform 30 may be denoted as a northbound interface. The southbound interface is configured to provide a function of managing a network element of another vendor, that is, an interface provided downwards. The northbound interface is an interface provided for another vendor or carrier for access and management, that is, an interface provided upwards.

FIG. 2 is a schematic architectural diagram of a control device according to an embodiment of this application.

The control device 10 includes a northbound interface 101, a southbound interface 102, a template engine 103, and a YANG model 104. The template engine 103 refers to a program that may parse and convert a configuration template and a device configuration parameter based on the YANG model 104 to obtain a configuration packet. For example, the template engine 103 may receive, through the northbound interface 101, the configuration template created by operation and maintenance personnel (or a user) and a device configuration parameter input by the operation and maintenance personnel. The template engine 103 invokes the YANG model 104 to parse the configuration template to obtain an effective configuration template, and obtains the configuration packet through conversion based on the effective configuration template obtained through parsing and the device configuration parameter. The configuration packet may be delivered to the network device 20 through the southbound interface, to enable the network device 20 to perform corresponding network configuration based on the configuration packet.

The configuration template may be a template used to perform network configuration on the network device. The configuration template may be created based on preset template syntax. The configuration template may include one or more variables. The operation and maintenance personnel may assign a value to the variable based on an actual network configuration requirement, for example, input a corresponding device configuration parameter for the variable. Configuration templates may have a template inheritance relationship and/or a template aggregation relationship. The template inheritance relationship may refer to that a configuration template is a parent configuration template of another configuration template, and the configuration template may inherit a configuration command set of the parent configuration template. The configuration command set may be a set formed by a plurality of network configuration commands. The template aggregation relationship may refer to that a configuration template may have one or more sub configuration templates, and the configuration template may reference a configuration command set of the sub configuration template. That the template engine 103 invokes the YANG model 104 to parse the configuration template may be that the template engine 103 invokes the YANG model 104 to determine whether the configuration template has a parent configuration template and/or a sub configuration template, so that the effective configuration template can be obtained through the conversion based on the configuration template and the parent configuration template and/or the sub configuration template of the configuration template. That the template engine 103 obtains the configuration packet through conversion based on the effective configuration template obtained through parsing and the device configuration parameter may be that the template engine 103 obtains the configuration packet by assigning the device configuration parameter to the variable in the effective configuration template (where the variable comes from the configuration template).

For example, the operation and maintenance personnel may create the configuration template on the control device 10 and input the device configuration parameter. For example, the control device 10 supports creation of the configuration template on a graphical interface or in a code text box compilation form. The template engine 103 parses and converts the configuration template to obtain the configuration packet. The control device 10 then delivers the configuration packet to the network device 20. The operation and maintenance personnel may alternatively create the configuration template on another device. The configuration template and the device configuration parameter are loaded to the control device 10 as plug-ins. The template engine 103 parses and converts the configuration template to obtain the configuration packet. The control device 10 then delivers the configuration packet to the network device 20.

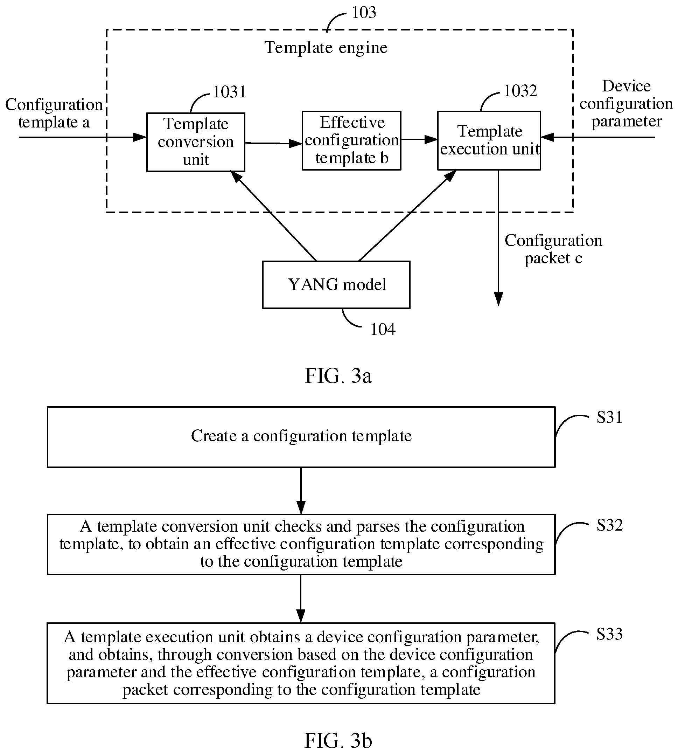

As shown in FIG. 3a, the template engine 103 may include a template conversion unit 1031 and a template execution unit 1032. When a configuration packet c corresponding to a configuration template a is generated, the configuration template a and a configuration template (for example, a parent configuration template and/or a sub configuration template of the configuration template a) associated with the configuration template a may be transferred to the template conversion unit 1031. The template conversion unit 1031 may perform a YANG syntax check and parsing on the input configuration template based on the YANG model, to obtain an effective configuration template b corresponding to the configuration template a. The effective configuration template b and the device configuration parameter may be transferred to the template execution unit 1032. The template execution unit 1032 may perform a YANG semantic check and conversion on the input effective configuration template b based on the YANG model, to obtain the configuration packet c corresponding to the configuration template a.

FIG. 3b is a schematic flowchart of converting a configuration template into a configuration packet based on a template engine according to an embodiment of this application.

S31: Create a configuration template.

In some embodiments, operation and maintenance personnel use a template technology to perform network configuration on a network device. This can improve operation and maintenance efficiency of the network device and flexibly customize different network configuration parameters for the network device. Template syntax of the configuration template may be predefined.

The operation and maintenance personnel may create one or more configuration templates based on an actual network configuration requirement. The configuration templates may have a template inheritance relationship and/or a template aggregation relationship. Based on a hierarchical template design concept, the configuration templates are highly reusable, highly flexible, and easy to implement, maintain, and extend. This can further reduce a workload of maintaining the network device.

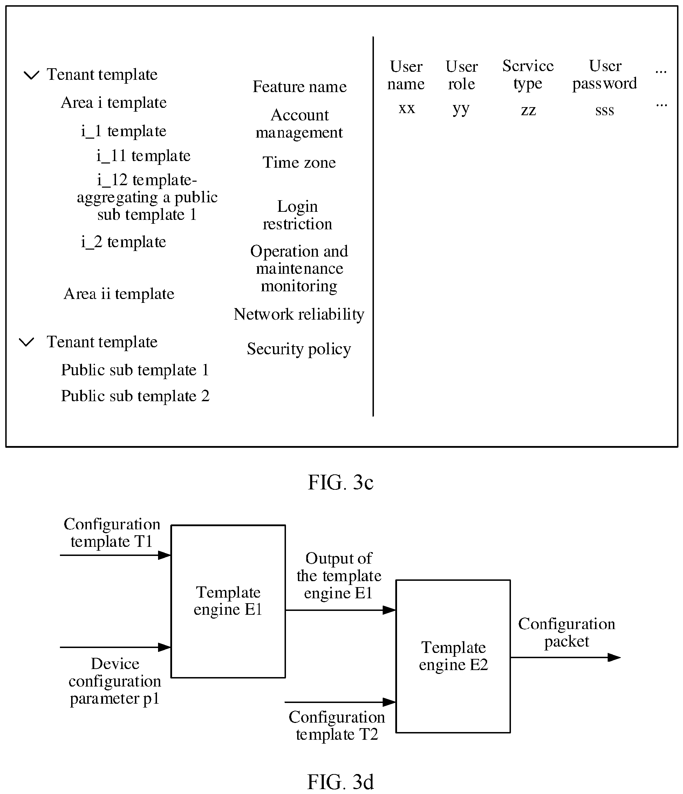

In some embodiments, the configuration template may be displayed in a text format, for example, the configuration template is displayed in a JSON format. The configuration template may alternatively be displayed on a page generated in a model-driven mode. FIG. 3c is a schematic diagram showing a plurality of configuration templates. The left part shows each configuration template and an inheritance relationship and/or an aggregation relationship between the configuration templates. A lower-layer configuration template inherits an upper-layer configuration template. For example, the configuration templates are a tenant template and a public template. The tenant template includes an area i template and an area ii template. The area i template includes a template i_1 and a template i_2 (the template i_1 and the template i_2 inherit the area i template). The template i_1 includes a template i_11 and a template i_12. The template i_11 inherits the template i_1, and the template i_12 inherits the template i_1 and aggregates a public sub template 1. The public template includes the public sub template 1 and a public sub template 2. The middle part shows a list of features (including, for example, account management, a time zone, a login restriction, operation and maintenance monitoring, network reliability, and a security policy) included in a current selected configuration template. The right part shows content of a selected feature (for example, account management includes a user name, a user role, a service type, a user password, and the like).

S32: The template conversion unit 1031 checks and parses the configuration template, to obtain an effective configuration template corresponding to the configuration template.

In some embodiments, before parsing the configuration template, the template conversion unit 1031 may first check the configuration template to determine whether the configuration template meets a specification. Checking the configuration template may include performing a YANG syntax check and a template syntax check on the configuration template, and a check result may be shown on a human-machine interaction interface. If a syntax error exists, a prompt may be output to remind the operation and maintenance personnel to modify the configuration template. After the check on the configuration template succeeds, the configuration template is parsed to determine whether the configuration template has a parent configuration template and/or a sub configuration template, so that an effective configuration template can be obtained through conversion based on the configuration template and the parent configuration template and/or the sub configuration template of the configuration template.

S33: The template execution unit 1032 obtains a device configuration parameter, and obtains, through conversion based on the device configuration parameter and the effective configuration template, a configuration packet corresponding to the configuration template.

In some embodiments, the template execution unit 1032 may obtain, through the northbound interface, the device configuration parameter input by the operation and maintenance personnel. Before converting the effective configuration template, the template execution unit 1032 may first perform a YANG semantic check on the effective configuration template to determine whether the effective configuration template meets a specification. A semantic check result may be shown on the human-machine interaction interface. If a semantic error exists, a prompt may be output to remind the operation and maintenance personnel to modify the configuration template or the effective configuration template. After the check on the effective configuration template succeeds, the device configuration parameter is written into a variable in the effective configuration template, to obtain the configuration packet corresponding to the configuration template.

As shown in FIG. 3d, the template engine may be invoked in a nested mode, to be specific, an output of a template engine may be used as an input of a next template engine, and is applied to another configuration template as a device configuration parameter again. A configuration packet output by a template engine at an end is delivered to the network device for network configuration. For example, a template engine E1 is configured to generate a service-level configuration packet, and a template engine E2 is configured to generate a device-level configuration packet. An input of the template engine E1 includes a configuration template T1 and a device configuration parameter p1, an input of the template engine E2 includes an output of the template engine E1 and a configuration template T2, and the template engine E2 generates a configuration packet based on the output of the template engine E1 and the configuration template T2.

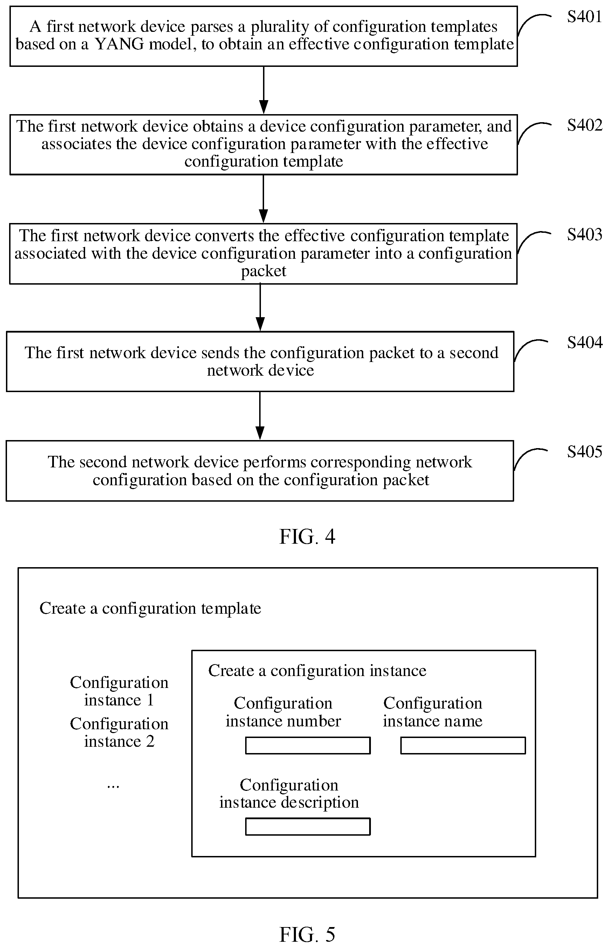

FIG. 4 is a schematic flowchart of a device configuration method according to an embodiment of this application. The device configuration method provided in this application may be implemented, for example, by using the following S401 to S405.

S401: A first network device parses a plurality of configuration templates based on a YANG model, to obtain an effective configuration template.

In some embodiments, the plurality of configuration templates may have a template inheritance relationship and/or a template aggregation relationship. The plurality of configuration templates may be configured to perform network configuration on a plurality of network device sets at different levels, and each network device set may include one or more network devices. A network configuration parameter required by each network device set may come from one or more configuration templates. The network device sets may include a common network device, or may include different network devices.

For example, the plurality of configuration templates are configured to perform network configuration on the plurality of network device sets, and the plurality of network device sets have a hierarchical relationship. Operation and maintenance management may be conveniently performed on the plurality of network device sets based on the template inheritance relationship and/or the template aggregation relationship. A network system NS1 includes N second network devices. The first network device is configured to perform operation and maintenance management on the network system NS1. N is a positive integer greater than 1. The first network device may be a controller, and the second network device may be a device such as a router, a switch, and a forwarder. For example, the first network device is corresponding to the control device 10 shown in FIG. 1, and the second network device is corresponding to the network device 20 shown in FIG. 1. The N second network devices may belong to a first network device set. M second network devices of the N second network devices belong to a second network device set, and the other P second network devices of the N second network devices belong to a third network device set. Q network devices of the M second network devices belong to a fourth network device set. M, P, and Q are all positive integers greater than 1, M+P=N, and Q is less than M. In this embodiment, division of the network device set is not limited, and network device set division may be performed on the second network devices in the network system NS1 based on an actual operation and maintenance requirement. For example, the network device set division may be performed based on an area in which the second network device is distributed or a network node to which the second network device belongs.

For example, the plurality of configuration templates include a configuration template T1, a configuration template T2, and a configuration template T3. The configuration template T2 inherits a configuration command set of the configuration template T1, and the configuration template T3 inherits a configuration command set of the configuration template T2. For example, a second network device deployed in a province A belongs to the first network device set, and the second network device in the province A is set to obtain the configuration command set of the configuration template T1 to perform network parameter configuration. A second network device deployed in a city B of the province A belongs to the second network device set, and the second network device in the city B of the province A is set to obtain the configuration command set of the configuration template T2 to perform network parameter configuration. A second network device deployed in a county C in the city B of the province A belongs to the third network device set, and the second network device in the county C in the city B of the province A is set to obtain a configuration command set of the configuration template T3 to perform network parameter configuration. When a configuration command of the configuration template T1 is modified, the configuration template T2 and the configuration template T3 may be synchronously modified.

Each configuration template may be created by the operation and maintenance personnel based on an actual network configuration requirement of a network device set. Each configuration template meets a YANG language specification of the YANG model, so that each configuration template can support inheritance syntax and aggregation syntax based on the YANG model, YANG semantics, a YANG syntax check, and the like. Inheritance based on the YANG model may refer to that a configuration template can inherit a configuration command set of a parent configuration template by sensing the YANG model (sensing an association relationship between the configuration template, the parent configuration template, and the YANG model). Aggregation based on the YANG may refer to that a configuration template T3 can reference a configuration command set of a sub configuration template by sensing the YANG model (sensing an association relationship between the configuration template T3, the sub configuration template, and the YANG model). The inheritance relationship and/or the aggregation relationship of the template may be based on a model type of the YANG model. The model type of the YANG model may be a type of a model defined in the YANG model. For example, the model type of the YANG model may be defined by using a list, a container, or the like.

In some embodiments, the plurality of configuration templates may be associated with the YANG model in advance. The first network device may include a plurality of YANG models, and the YANG models may correspond to different network device types or different models of network devices. An association relationship between the YANG model and the device type or the device model may be established in advance. The configuration template is associated with the YANG model by setting the device type or the device model used by the configuration template.

In some embodiments, the operation and maintenance personnel may create the configuration template in a plurality of manners, and set an association relationship between the configuration templates. For example, by using inheritance syntax or aggregation syntax, a first configuration template in the plurality of configuration templates may inherit or aggregate a second configuration template of the plurality of configuration templates. A manner of creating the configuration template is not limited in embodiments of this application. For example, the operation and maintenance personnel may create the configuration template by compiling code, or the operation and maintenance personnel may create the configuration template on a template creation page. Each configuration template may include one or more configuration commands. The template creation page may be a page generated in a YANG model-driven mode. The template creation page may include a plurality of configuration items, and content of the configuration item may be input or selected by the operation and maintenance personnel, so that the configuration template can be generated based on content of the plurality of configuration items. The first network device may alternatively receive, through a northbound interface, the configuration template sent by another network device or a server.

As shown in FIG. 5, in response to a creation instruction for the configuration template, the first network device may enable a UI configured to create the configuration template, and may create a plurality of configuration instances for the configuration module in the UI. Each configuration instance may include a plurality of attribute items. For example, the plurality of attribute items may include a configuration instance number (vlan-id), a configuration instance name (name), a configuration instance description (description), and the like. The attribute item included in the configuration instance is not limited in this application, and may be set based on an actual application requirement.

In some embodiments, before the first network device performs network configuration on the one or more second network devices, the first network device may prestore the YANG model. The YANG model may be sent by the another network device or the server to the first network device. For example, the first network device may receive the YANG model through the northbound interface.

For example, the YANG model includes the following code information:

```
         augment "/neper: nes/neper: ne" {
            list vlan {
                app: ne-application-definition "vlan";
                uses app-extend: application-config-result;
                uses app: application-optional-para;
                description "vlan parameters";
                key "vlan-id";
                leaf vlan-id {
                     type unit16 {
                         range "1..4094";
                     }
                 }
                leaf name {
                     type string {
                         length "1..31";
                     }
                 }
                leaf description {
                     type tring {
                         length "1..80";
                     }
                 }.
```

In the foregoing definition of the YANG model, the configuration instance is identified by using a vlan. "list vlan" indicates that there may be a plurality of vlan models, that is, "list vlan" defines a model of the vlan based on the model type of the YANG model. key "vlan-id" indicates that a vlan is uniquely identified by vlan-id. "leaf vlan-id", "leaf name", and "leaf description" indicate that a vlan has three attribute items, which are respectively vlan-id, name, and description.

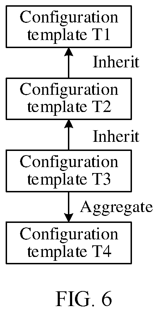

It is assumed that the plurality of configuration templates include a configuration template T1, a configuration template T2, a configuration template T3, and a configuration template T4. The operation and maintenance personnel expect that all second network devices deployed in a country G obtain a configuration command set of the configuration template T1, all second network devices deployed in a province A of the country G obtain a configuration command set of the configuration template T2, and all second network devices deployed in a city B of the province A of the country G obtain a configuration command set of the configuration template T3. According to the foregoing requirements, it may be set that the configuration template T2 inherits the configuration command set of the configuration template T1, and the configuration template T3 inherits the configuration command set of the configuration template T2. In addition, it is assumed that, to simplify code of the configuration template T3, the configuration template T3 references a configuration command set of the configuration template T4, in other words, it may be set that the configuration template T3 aggregates the configuration template T4. A relationship between the configuration template T1, the configuration template T2, the configuration template T3, and the configuration template T4 may be shown in FIG. 6.

It is assumed that the configuration template T1 includes the following code information:

```
         {
            "vlan-uni-gnd:vlan": [
                 {
                     "vlan-id": 10,
                     "name": "{ {vlan_0_name} }",
                     "description": "vlan 10"
                 }
            ]
         }.
```

The configuration template T1 defines a configuration instance vlan10. A field of the attribute item name is variable, is defined in a variable form as {{vlan _0_name}}, and can be specified by the operation and maintenance personnel subsequently.

It is assumed that the configuration template T2 includes the following code information:

```
         // z:extends "configuration template T1.json"
         {
            "vlan-uni-gnd:vlan": [
                 {
                     "vlan-id": 20,
                     "name": "{{vlan_1_name}}",
                     "description": "{ {vlan_1_description}}"
            ],
            "interface-uni-gnd:interfaceConfig": [
                 {
                     "interfaceName": "vlanif10",
                     "description": "{ {interfaceConfig_0_description}}"
                 },
                 {
                     "interfaceName": "vlanif20",
                     "description": "{ {interfaceConfig_1_description}}"
                 }
         }.
```

The configuration template T2 uses the keyword "z:extends" to indicate inheritance, or may use another syntax form to indicate inheritance. This is not limited in this application. The configuration template T2 inherits the configuration template T1 and is added with configuration instances vlan20, vlanif10, and vlanif20. The configuration template T2 needs to sense the YANG model to inherit the configuration template T1. If the YANG model is not sensed, vlan20 in the configuration template T2 overwrites vlan10 in the configuration template T1. By sensing the YANG model, a plurality of vlans can be defined, and each vlan is identified by vlan-id. In this way, the configuration template T2 inherits the configuration template T1.

It is assumed that the configuration template T4 includes the following code information:

```
         {
            "static-routing-ipv4-uni-gnd:static-routing-ipv4": [
                 {
                     "destinationPrefix": "10.1.1.0/24",
                     "vpnInstance": "_public_",
                     "nextHopType": "Ip"
                 }
            ],
            "interface-uni-gnd:interfaceConfig": [
                 {
                     "interfaceName": "vlanif30",
                     "description": "{ {interfaceConfig_2_ description}}"
                 }
            ]
         }.
```

The configuration template T4 defines a static route 10.1.1.0 and a configuration instance vlanif30.

It is assumed that the configuration template T3 includes the following code information:

```
// z:extends "configuration template T2.json"
         // z:include "configuration template T4.json"
         {
            "interface-uni-gnd:interfaceConfig": [
                 {
                     "interfaceName": "vlanif10",
                     "description": "{ {interfaceConfig_0_description}}"
                 }, // z:template-tag = delete
            ],
            "vlan-uni-gnd:vlan": [
                 {
                     "vlan-id": 10,
                     "name": "{ {vlan_0_name} }",
                     "description": "This is vlan 10"
                 }
            ]
         }.
```

The configuration template T3 inherits the configuration template T2, aggregates the configuration template T4, uses the keyword "z:include" to indicate aggregation, and may use another syntax form to indicate inheritance. This is not limited in this application. An aggregation relationship also needs sensing of the YANG model. The configuration template T4 has the configuration instance vlanif30, and the configuration template T2 has the configuration instance vlanif20. By sensing the YANG model, it is determined that the instance vlanif30 is added and vlanif20 is not overwritten in the configuration template T3.

The configuration template T3 uses code "description": "This is vlan 10" to rewrite the configuration instance vlan10 in the configuration template T1 and changes the field of description to This is vlan 10. When the configuration template T3 inherits the configuration template T2 (the configuration template T2 inherits the configuration template T1), the configuration template T3 senses that vlan-id of the YANG model is key. In this case, the field of description of vlan10 in the configuration template T3 overwrites the field of description of vlan10 in the configuration template T1. The configuration template T3 deletes the configuration instance vlanif10 (inheriting the configuration template T2) by using syntax "// z:template-tag = delete". The YANG model also needs to be sensed for the deletion operation. It is sensed that the syntax operation is to delete a configuration instance.

When the configuration template T1, the configuration template T2, the configuration template T3, and the configuration template T4 are loaded to a template engine, the template engine performs inheritance relationship parsing and aggregation relationship parsing, and generates an effective configuration template corresponding to the configuration template T3. During a parsing process, the template engine may perform a syntax check on each configuration template based on the YANG model. For example, the YANG model defines a vlan-id range is from 1 to 4094, and the template engine checks whether a vlan-id range of each configuration template is within the range of 1 to 4094.

The configuration template T3 inherits the configuration template T2, and aggregates the configuration template T4, and the configuration template T2 inherits the configuration template T1. Therefore, when an effective configuration template F1 corresponding to the configuration template T3 needs to be generated, the configuration template T1, the configuration template T2, the configuration template T3, and the configuration template T4 need to be input to the template engine, and the template engine obtains the effective configuration template F1 through parsing and conversion. The effective configuration template F1 includes the following code information:

```
         {
            "vlan-uni-gnd:vlan": [
                 {
                     "vlan-id": 10,
                     "name": "{ {vlan_0_name} }",
                     "description": "This is vlan 10"
                 },
                 {
                     "vlan-id": 20,
                     "name": "{{vlan_1_name}}",
                     "description": "{ {vlan_1_description}}"
                 }
            ],
            "interface-uni-gnd:interfaceConfig": [
                 {
                     "interfaceName": "vlanif20",
                     "description": "{ {interfaceConfig_1_description}}"
                 },
                 {
                     "interfaceName": "vlanif30",
                     "description": "{ {interfaceConfig_2_ description}}"
                 }
            ],
            "static-routing-ipv4-uni-gnd:static-routing-ipv4": [
                 {
                     "destinationPrefix": "10.1.1.0/24",
                     "vpnInstance": "_public_",
                     "nextHopType": "Ip"
                 }
            ]
         }.
```

In the effective configuration template F1, the configuration instance vlan10 inherits the configuration template T1, and the configuration template T3 rewrites the field of description; the configuration instances vlan20 and vlanif20 inherit the configuration template T2; the configuration instance vlanif30 and the static route 10.1.1.0 are aggregated by the configuration template T4.

It may be understood that, when an effective configuration template F2 corresponding to the configuration template T1 needs to be generated, because the configuration template T1 does not inherit or aggregate another configuration template, only the configuration template T1 may be input to the template engine, and the template engine obtains the effective configuration template F2 through parsing and conversion. When an effective configuration template F3 corresponding to the configuration template T2 needs to be generated, because the configuration template T2 inherits the configuration template T1, the configuration template T1 and the configuration template T2 are input to the template engine, and the template engine obtains the effective configuration template F3 through parsing and conversion.

S402: The first network device obtains a device configuration parameter, and associates the device configuration parameter with the effective configuration template.

In some embodiments, the device configuration parameter may be input by the operation and maintenance personnel. For example, variables {{vlan_0_name}}, {{vlan_1_name}}, { { vlan_1_description} }, {{interfaceConfig_1_description}}, and {{interfaceConfig_2_description}} in the effective configuration template F1 are the device configuration parameter that needs to be input by the operation and maintenance personnel. The first network device may receive the device configuration parameter through a northbound interface, and associate the device configuration parameter with the effective configuration template F1, for subsequently assigning a value to the variable in the effective configuration template F1. For example, when parameter configuration is performed on the effective configuration template F1, the template engine may associate the device configuration parameter received through the northbound interface with the effective configuration template F1. The associating the device configuration parameter with the effective configuration template F1 may refer to associating the device configuration parameter with the variable in the effective configuration template F1. For example, a plurality of device configuration parameters input by the operation and maintenance personnel are associated with the variables {{vlan_0_name}}, {{vlan_1_name}}, { { vlan_1_description} }, {{interfaceConfig_1_description}}, and {{interfaceConfig_2_description}}. The operation and maintenance personnel may assign a value to each variable in the effective configuration template F1 on a human-machine interaction interface, to associate the device configuration parameters with the effective configuration template F1.

For example, the device configuration parameter "vlan10" input by the operation and maintenance personnel is associated with the variable {{vlan_0_name}}, the device configuration parameter "vlan20" is associated with the variable {{vlan_1_name}}, the device configuration parameter "This is vlan 20" is associated with the variable {{vlan_1_description}}, the device configuration parameter "vlanif20" is associated with the variable {{interfaceConfig_1_description}}, and the device configuration parameter "vlanif30" is associated with the variable { {interfaceConfig_2_description}}.

S403: The first network device converts the effective configuration template associated with the device configuration parameter into a configuration packet.

In some embodiments, after the device configuration parameter is associated with the effective configuration template, the first network device may convert, by using the template engine, the effective configuration template associated with the device configuration parameter into the configuration packet.

For example, the first network device may convert, by using the template engine, the effective configuration template F1 associated with the device configuration parameter into a configuration packet M1. The configuration packet M1 includes the following code information:

```
         {
            "vlan-uni-gnd:vlan": [
                 {
                     "vlan-id": 10,
                     "name": "vlan10",
                     "description": "This is Vlan 10" // rewriting
                 },
                 {
                     "vlan-id": 20,
                     "name": "vlan20",
                     "description": "This is vlan 20"
                 }
            ],
            "interface-uni-gnd:interfaceConfig": [
                 {
                     "interfaceName": "Vlanif20",
                     "description": "vlanif20"
                 },
                 {
                     "interfaceName": "Vlanif30",
                     "description": "vlanif30"
                 }
            ],
            "static-routing-ipv4-uni-gnd:static-routing-ipv4": [
                 {
                     "destinationPrefix": "10.1.1.0/24",
                     "vpnInstance": "_public_",
                     "nextHopType": "Ip"
                 }
            ]
         }.
```

In a process of converting the effective configuration template F1 associated with the device configuration parameter into the configuration packet M1, the template engine may perform a YANG semantic check on the effective configuration template F1, and a semantic check result may be output through the human-machine interaction interface.

When the effective configuration template F2 is associated with the device configuration parameter input by the operation and maintenance personnel, the effective configuration template F2 associated with the device configuration parameter may also be converted to obtain a configuration packet M2. When the effective configuration template F3 is associated with the device configuration parameter input by the operation and maintenance personnel, the effective configuration template F3 associated with the device configuration parameter may also be converted to obtain a configuration packet M3.

S404: The first network device sends the configuration packet to the second network device.

After obtaining the configuration packet through conversion, the first network device may send the configuration packet to a corresponding second network device. For example, the configuration packet M1 corresponds to the configuration template T3, and the configuration packet M1 may be sent to the second network device deployed in the city B of the province A of the country G, to perform network configuration. The configuration packet M2 corresponds to the configuration template T1, and the configuration packet M2 may be sent to the second network device deployed in the country G, to perform network configuration. The configuration packet M3 corresponds to the configuration template T2, and the configuration packet M3 may be sent to the second network device deployed in the province A of the country G, to perform network configuration.

S405: The second network device performs corresponding network configuration based on the configuration packet.

In some embodiments, after receiving the configuration packet, the second network device may perform corresponding network configuration based on the configuration packet. For example, the second network device may parse the configuration packet to obtain one or more configuration command lines, and execute the one or more configuration command lines.

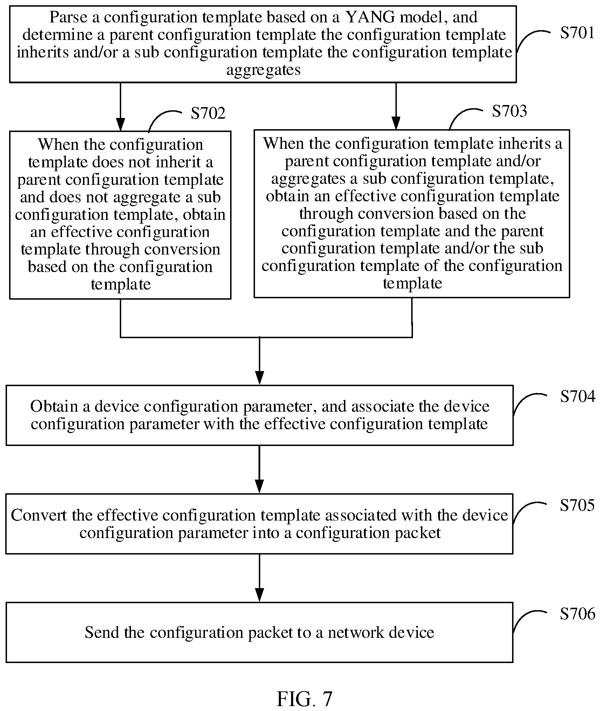

FIG. 7 is a schematic flowchart of a device configuration method according to an embodiment of this application. The device configuration method provided in this application may be implemented, for example, by using the following S701 to S706. The device configuration method provided in this application may be applied to the control device 10 shown in FIG. 1.

S701: Parse a configuration template based on a YANG model, and determine a parent configuration template the configuration template inherits and/or a sub configuration template the configuration template aggregates.

In some embodiments, the YANG model defines a YANG language specification that the configuration template needs to meet. When the configuration template is parsed, the YANG model associated with the configuration template may be first determined, and the configuration template is parsed by using the YANG model associated with the configuration template, to avoid a case in which the configuration template cannot be parsed. For example, different device types or device models may correspond to different YANG models. The configuration template may be associated with the YANG model by setting the device type or device model used by the configuration template, so that the YANG model associated with the configuration template can be determined by obtaining the device type or device model used by the configuration template.

S702: When the configuration template does not inherit a parent configuration template and does not aggregate a sub configuration template, obtain an effective configuration template through conversion based on the configuration template.

S703: When the configuration template inherits a parent configuration template and/or aggregates a sub configuration template, obtain an effective configuration template through conversion based on the configuration template and the parent configuration template and/or the sub configuration template of the configuration template.

In some embodiments, if the configuration template does not inherit a parent configuration template and does not aggregate a sub configuration template, it indicates that the configuration template does not inherit a configuration command set of another configuration template or reference a configuration command set of another configuration template. The configuration template may undergo a check (for example, a YANG syntax check and a template syntax check) and be converted to obtain the effective configuration template.

When the configuration template inherits a parent configuration template and/or aggregates a sub configuration template, it indicates that the configuration template inherits a configuration command set of another configuration template and/or references a configuration command set of another configuration template. The configuration template and the parent configuration template and/or the sub configuration template of the configuration template may undergo the check (for example, the YANG syntax check and the template syntax check). When the check on the configuration template and the parent configuration template and/or the sub configuration template of the configuration template all succeeds, the configuration template and the parent configuration template and/or the sub configuration template of the configuration template are converted to obtain the effective configuration template.

S704: Obtain a device configuration parameter, and associate the device configuration parameter with the effective configuration template.

In some embodiments, the device configuration parameter may be input by the operation and maintenance personnel based on an actual configuration requirement. The configuration template includes one or more variables, and the effective configuration template obtained through the conversion based on the configuration template also includes one or more variables. The associating the device configuration parameter with the effective configuration template may refer to associating the device configuration parameter with a corresponding variable, so that a configuration packet can be obtained subsequently by assigning a value to the variable in the effective configuration template.

S705: Convert the effective configuration template associated with the device configuration parameter into the configuration packet.

In some embodiments, in a process of converting the effective configuration template associated with the device configuration parameter into the configuration packet, a YANG semantic check may be performed on the effective configuration template based on the YANG model, to determine whether the effective configuration template meets a YANG semantic specification, to avoid a case in which the configuration packet subsequently delivered to a network device 20 cannot be parsed by the network device 20. When the check on the effective configuration template succeeds, the effective configuration template associated with the device configuration parameter is converted into the configuration packet. For example, the value may be assigned to the variable in the effective configuration template based on the device configuration parameter, to obtain the configuration packet.

S706: Send the configuration packet to the network device 20.

In some embodiments, after the configuration packet is obtained through conversion, the configuration packet may be sent to the network device 20, so that the network device 20 can perform corresponding network configuration based on the configuration packet.

In some embodiments, a format of the configuration packet may include a JSON format or an XML format. A network configuration protocol supported by the network device 20 may be obtained, and the format of the configuration packet may be determined based on the network configuration protocol. For example, for a network device that supports a RESTCONF protocol, a delivered configuration packet may be in the JSON format or the XML format; and for a network device that supports a NETCONF protocol, a delivered configuration packet may be in the XML format.

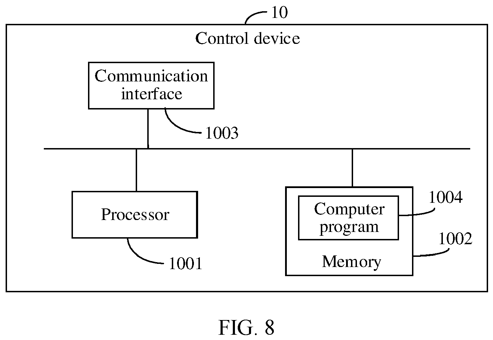

FIG. 8 is a schematic diagram of a hardware structure of a control device 10 according to an embodiment of this application. As shown in FIG. 8, the control device 10 may include a processor 1001, a memory 1002, and a communication interface 1003. The memory 1002 may be configured to store one or more computer programs 1004. The one or more computer programs 1004 are configured to be executed by the processor 1001. The one or more computer programs 1004 include instructions, and the instructions may be used to perform, in the control device 10, the device configuration method shown in FIG. 7.

It may be understood that the schematic structure in this embodiment does not constitute a specific limitation on the control device 10. In some other embodiments, the control device 10 may include more or fewer components than those shown in the figure, or some components may be combined, or some components may be split, or a different component arrangement may be used.

The processor 1001 may be a central processing unit (central processing unit, CPU), a network processor (network processor, NP), or a combination of a CPU and an NP. For example, the processor 1001 may alternatively be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The processor 1001 may be one processor, or may include a plurality of processors.

The memory 1002 may include a volatile memory, for example, a random-access memory (random-access memory, RAM). Alternatively, the memory may include a non-volatile memory, for example, a read-only memory (read-only memory, ROM), a flash memory (English: flash memory), a hard disk drive (hard disk drive, HDD), or a solid-state drive (solid-state drive, SSD). Alternatively, the memory 1002 may include a combination of the foregoing types of memories.

The communication interface 1003 may be configured to communicate with the network device 20. For example, the communication interface 1003 may include a southbound interface and a northbound interface.

An embodiment further provides a computer storage medium. The computer storage medium stores computer instructions. When the computer instructions are run on a network device, the network device is enabled to perform the foregoing related method steps to implement the device configuration method in the foregoing embodiments.

An embodiment further provides a computer program product. When the computer program product runs on a computer, the computer is enabled to perform the foregoing related steps to implement the device configuration method in the foregoing embodiments.

In addition, an embodiment of this application further provides an apparatus. The apparatus may specifically be a chip, a component, or a module. The apparatus may include a processor and a memory that are connected. The memory is configured to store computer-executable instructions. When the apparatus runs, the processor may execute the computer-executable instructions stored in the memory, to enable the chip to perform the device configuration method in the foregoing method embodiments.

The control device, the computer storage medium, the computer program product, or the chip provided in embodiments is configured to perform the corresponding method provided above. Therefore, for beneficial effects that can be achieved by the control device, the computer storage medium, the computer program product, or the chip, refer to the beneficial effects in the corresponding method provided above. Details are not described herein again.

Based on the description of the foregoing implementations, a person skilled in the art may clearly understand that, for ease and brevity of description, division of the foregoing functional modules is merely used as an example for description. In actual application, the foregoing functions may be allocated to different functional modules for implementation based on a requirement, that is, an internal structure of the apparatus is divided into different functional modules, to implement all or some of the foregoing described functions.

In the several embodiments provided in this application, it should be understood that the disclosed apparatus and method may be implemented in another manner. For example, the described apparatus embodiment is an example. For example, the module or unit division is logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one position, or may be distributed on different positions. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor to perform all or some of the steps of the methods described in embodiments of this application. The foregoing storage medium includes any medium that can store program code, such as a USB flash drive, a removable hard disk, a ROM, a RAM, a magnetic disk, or an optical disc.
The foregoing descriptions are merely specific implementations of this application, but are not intended to limit the protection scope of this application. Any variation or replacement within the technical scope disclosed in this application shall fall within the protection scope of this application.

## Claims

1. A device configuration method, wherein the method comprises:
parsing a configuration template based on a yet another next generation YANG model, and determining a parent configuration template the configuration template inherits and/or a sub configuration template the configuration template aggregates;
if the configuration template inherits a parent configuration template and/or aggregates a sub configuration template, obtaining an effective configuration template through conversion based on the configuration template and the parent configuration template and/or the sub configuration template of the configuration template, wherein the configuration template and the parent configuration template and/or the sub configuration template of the configuration template all meet a YANG language specification of the YANG model;
obtaining a device configuration parameter, and associating the device configuration parameter with the effective configuration template;
converting the effective configuration template associated with the device configuration parameter into a configuration packet; and
sending the configuration packet to a network device.

2. The device configuration method according to claim 1, wherein the method further comprises:
if the configuration template does not inherit a parent configuration template and does not aggregate a sub configuration template, obtaining the effective configuration template through conversion based on the configuration template.

3. The device configuration method according to claim 1 or 2, wherein before the parsing a configuration template based on a YANG model, the method comprises:
obtaining the YANG model associated with the configuration template.

4. The device configuration method according to claim 3, wherein the obtaining the YANG model associated with the configuration template comprises:
obtaining a device type or a device model used by the configuration template; and
determining, based on the device type or the device model, the YANG model associated with the configuration template.

5. The device configuration method according to claim 1, wherein the obtaining an effective configuration template through conversion based on the configuration template and the parent configuration template and/or the sub configuration template of the configuration template comprises:
performing a YANG syntax check on the configuration template and the parent configuration template and/or the sub configuration template of the configuration template based on the YANG model, wherein the parent configuration template the configuration template inherits and/or the sub configuration template the configuration template aggregates are/is configured based on a model type of the YANG model; and
if the check on the configuration template and the parent configuration template and/or the sub configuration template of the configuration template all succeeds, obtaining the effective configuration template through the conversion based on the configuration template and the parent configuration template and/or the sub configuration template of the configuration template.

6. The device configuration method according to claim 1, wherein the converting the effective configuration template associated with the device configuration parameter into a configuration packet comprises:
performing, based on the YANG model, a YANG semantic check on the effective configuration template associated with the device configuration parameter; and
if the check on the effective configuration template succeeds, converting the effective configuration template associated with the device configuration parameter into the configuration packet.

7. The device configuration method according to claim 6, wherein the effective configuration template comprises a variable, and the converting the effective configuration template associated with the device configuration parameter into the configuration packet comprises:
assigning a value to the variable in the effective configuration template based on the device configuration parameter, to obtain the configuration packet.

8. The device configuration method according to claim 6, wherein the converting the effective configuration template associated with the device configuration parameter into a configuration packet comprises:
obtaining a network configuration protocol supported by the network device; and
converting the effective configuration template associated with the device configuration parameter into the configuration packet, wherein a format of the configuration packet is determined based on the network configuration protocol.

9. The device configuration method according to claim 8, wherein the format of the configuration packet comprises a JavaScript object notation JSON format or an extensible markup language XML format, and the parent configuration template and the sub configuration template are based on a model type of the YANG model.

10. The device configuration method according to any one of claims 1 to 9, wherein the method further comprises:
enabling a template creation page in response to a creation instruction for the configuration template, wherein the template creation page comprises a plurality of configuration items; and
generating the configuration template based on content of the plurality of configuration items.

11. A device configuration method, applied to a first network device and a second network device, wherein the method comprises:
parsing, by the first network device, a plurality of configuration templates based on a yet another next generation YANG model to obtain an effective configuration template, wherein the plurality of configuration templates have a template inheritance relationship and/or a template aggregation relationship, and the plurality of configuration templates all meet a YANG language specification of the YANG model;
obtaining, by the first network device, a device configuration parameter, and associating the device configuration parameter with the effective configuration template;
converting, by the first network device, the effective configuration template associated with the device configuration parameter into a configuration packet;
sending, by the first network device, the configuration packet to the second network device; and
performing, by the second network device, corresponding network configuration based on the configuration packet.

12. The device configuration method according to claim 11, wherein before the parsing, by the first network device, a plurality of configuration templates based on a YANG model, the method comprises:
obtaining, by the first network device, the YANG model associated with the plurality of configuration templates.

13. The device configuration method according to claim 12, wherein the obtaining, by the first network device, the YANG model associated with the plurality of configuration templates comprises:
obtaining, by the first network device, a device type or a device model used by the plurality of configuration templates; and
determining, by the first network device based on the device type or the device model, the YANG model associated with the plurality of configuration templates.

14. The device configuration method according to claim 11, wherein the parsing, by the first network device, a plurality of configuration templates based on a YANG model to obtain an effective configuration template comprises:
performing, by the first network device, a YANG syntax check and template inheritance relationship parsing and/or template aggregation relationship parsing on each configuration template of the plurality of configuration templates based on the YANG model, wherein the template inheritance relationship parsing and/or the template aggregation relationship parsing are/is configured based on a model type of the YANG model; and
if the check on each configuration template succeeds, converting, by the first network device, the plurality of configuration templates into the effective configuration template based on a parsing result.

15. The device configuration method according to claim 11, wherein the converting, by the first network device, the effective configuration template associated with the device configuration parameter into a configuration packet comprises:
performing, by the first network device based on the YANG model, a YANG semantic check on the effective configuration template associated with the device configuration parameter; and
if the check on the effective configuration template succeeds, converting, by the first network device, the effective configuration template associated with the device configuration parameter into the configuration packet.

16. The device configuration method according to claim 15, wherein the effective configuration template comprises a variable, and the converting, by the first network device, the effective configuration template associated with the device configuration parameter into the configuration packet comprises:
assigning, by the first network device, a value to the variable in the effective configuration template based on the device configuration parameter, to obtain the configuration packet.

17. The device configuration method according to claim 15, wherein the converting, by the first network device, the effective configuration template associated with the device configuration parameter into a configuration packet comprises:
obtaining, by the first network device, a network configuration protocol supported by the second network device; and
converting, by the first network device, the effective configuration template associated with the device configuration parameter into the configuration packet, wherein a format of the configuration packet is determined based on the network configuration protocol.

18. The device configuration method according to claim 17, wherein the format of the configuration packet comprises a JavaScript object notation JSON format or an extensible markup language XML format, the first network device comprises a controller, and the second network device comprises one of a switch, a router, or a forwarder.

19. The device configuration method according to any one of claims 11 to 18, wherein the method further comprises:
enabling, by the first network device, a template creation page in response to a creation instruction for the configuration template, wherein the template creation page comprises a plurality of configuration items; and
generating, by the first network device, the configuration template based on content of the plurality of configuration items.

20. A computer-readable storage medium, wherein the computer-readable storage medium stores computer instructions, and when the computer instructions are run on a processor of a network device, the network device is enabled to perform the device configuration method according to any one of claims 1 to 10.

21. A network device, wherein the network device comprises a processor and a memory, the memory is configured to store instructions, and the processor is configured to invoke the instructions in the memory, to enable the network device to perform the device configuration method according to any one of claims 1 to 10.

22. A chip, coupled to a memory in a network device, wherein the chip is configured to control the network device to perform the device configuration method according to any one of claims 1 to 10.
